# DEMANDE DE BREVET EUROPEEN

(11) **EP 2 998 062 A1**
(43) Date de publication de la demande: **23.03.2016**
(21) Numéro de dépôt: 15179169.6
(22) Date de dépôt: 30.11.2010
(51) Int. Cl.: B23P 15/04, B23K 20/12, B23K 9/04, F04D 29/38, F01D 5/14

(54) **PROCÉDÉ DE RÉALISATION D'UN RENFORT MÉTALLIQUE D'AUBE DE TURBOMACHINE**

(30) Priorité: 30.11.2009 FR 0958528
(62) Demande divisionnaire de: 10784801.2
(71) Demandeur: SNECMA, 75015 Paris (FR)
(72) Inventeur: CATTIEZ, Bernard, José, Michel, 91000 EVRY (FR); FLESCH, Thierry, Jean, Emile, 77310 PRINGY (FR); GUINOIS, Jérôme, 91100 CORBEIL ESSONNES (FR); LEVEQUE, Stéphane, André, 91300 MASSY (FR); MAROLLE, Philippe, 91320 WISSOUS (FR)
(74) Mandataire: Cabinet Camus Lebkiri

(57) **Abrégé**

La présente invention concerne un procédé de réalisation d'un renfort métallique (30) de bord d'attaque ou de bord de fuite d'aube (10) de turbomachine, ledit procédé comportant successivement : une étape (130) de positionnement d'une première tôle métallique (41) et d'une deuxième tôle métallique (42) sur un profilé (44) au moyen d'un outillage spécifique (60) positionnant ledit profilé (44) et lesdites tôles métalliques (41, 42) de sorte que chaque tôle métallique (41, 42) présente une surface de contact (49) positionnée parallèlement avec une surface de contact (46, 47) dudit profilé (44) ; une étape (140) de soudage sans métal d'apport desdites tôles métalliques (41, 42) sur ledit profilé (44) de sorte que ladite surface de contact (49) de ladite première tôle métallique (41) est solidaire de ladite surface de contact (46) dudit profilé (44) et que ladite surface de contact (49) de ladite deuxième tôle métallique (42) est solidaire de ladite surface de contact (47) dudit profilé (44).

## Description

La présente invention concerne un procédé de réalisation d'un renfort métallique d'aube composite ou métallique de turbomachine.

Plus particulièrement l'invention concerne un procédé de réalisation d'un renfort métallique de bord d'attaque d'aube de turbomachine.

Le domaine de l'invention est celui des turbomachines et plus particulièrement celui des aubes de soufflante, en matériau composite ou métallique, de turbomachine et dont le bord d'attaque comporte un renfort structurel métallique.

Toutefois, l'invention est également applicable à la réalisation d'un renfort métallique destiné à renforcer un bord de fuite d'aube de turbomachine.

On rappelle que le bord d'attaque correspond à la partie antérieure d'un profil aérodynamique qui fait face au flux d'air et qui divise l'écoulement d'air en un écoulement d'air d'intrados et en un écoulement d'air extrados. Le bord de fuite correspond à la partie postérieure d'un profil aérodynamique où se rejoignent les écoulements intrados et extrados.

Il est connu d'équiper les aubes de soufflante d'une turbomachine, réalisées en matériaux composites, d'un renfort structurel métallique s'étendant sur toute la hauteur de l'aube et au-delà de leur bord d'attaque comme mentionné dans le document EP1908919. Un tel renfort permet de protéger l'aubage composite lors d'un impact d'un corps étranger sur la soufflante, tel que par exemple un oiseau, de la grêle ou encore des cailloux.

En particulier, le renfort structurel métallique protège le bord d'attaque de l'aube composite en évitant des risques de délamination, de rupture de fibre ou encore d'endommagement par décohésion fibre/matrice.

De façon classique, une aube de turbomachine comporte une surface aérodynamique s'étendant, selon une première direction, entre un bord d'attaque et un bord de fuite et, selon une deuxième direction sensiblement perpendiculaire à la première direction, entre un pied et un sommet de l'aube. Le renfort structurel métallique épouse la forme du bord d'attaque de la surface aérodynamique de l'aube et s'étend selon la première direction au-delà du bord d'attaque de la surface aérodynamique de l'aube pour épouser le profil de l'intrados et de l'extrados de l'aube et selon la deuxième direction entre le pied et le sommet de l'aube.

De façon connue, le renfort structurel métallique est une pièce métallique réalisée entièrement par fraisage à partir d'un bloc de matière.

Un autre exemple de réalisation d'un tel renfort structurel métallique est notamment décrit dans le document FR2319008.

Cependant, le renfort métallique d'un bord d'attaque d'aube est une pièce complexe à réaliser, nécessitant de nombreuses opérations de reprises et des outillages complexes impliquant des coûts de réalisation importants.

Dans ce contexte, l'invention vise à résoudre les problèmes mentionnés ci-dessus en proposant un procédé de réalisation d'un renfort métallique de bord d'attaque ou de bord de fuite d'aube de turbomachine permettant de réduire significativement les coûts de réalisation d'une telle pièce et de simplifier la gamme de fabrication.

A cette fin, l'invention propose un procédé de réalisation d'un renfort métallique de bord d'attaque, ou de bord de fuite, d'aube de turbomachine comportant successivement :
- une étape de positionnement d'une première tôle métallique et d'une deuxième tôle métallique sur un profilé au moyen d'un outillage spécifique positionnant ledit profilé et lesdites tôles métalliques de sorte que chaque tôle métallique présente une surface de contact positionnée parallèlement avec une surface de contact dudit profilé ;
- une étape de soudage sans métal d'apport desdites tôles métalliques sur ledit profilé de sorte que ladite surface de contact de ladite première tôle métallique est solidaire de ladite surface de contact dudit profilé et que ladite surface de contact de ladite deuxième tôle métallique est solidaire de ladite surface de contact dudit profilé.

Grâce à l'invention, le renfort structurel métallique est réalisé de façon simple et rapide à partir de deux tôles métalliques planes, d'un profilé standard du commerce et d'un procédé de soudage sans l'utilisation d'un métal d'apport.

Ce procédé de réalisation permet ainsi de s'affranchir de la réalisation complexe du renfort par fraisage dans la masse à partir de méplats monoblocs nécessitant des volumes importants de matière de mise en oeuvre et par conséquent des coûts importants en approvisionnement de matière première.

En effet, le coût d'obtention d'un renfort métallique de bord d'attaque ou de bord de fuite d'aube de turbomachine est particulièrement réduit notamment par la réduction du volume de matière nécessaire à la réalisation du renfort, par l'approvisionnement de forme standard du commerce (barres, tôles) et par l'utilisation de procédés industriels peu onéreux de mise en oeuvre.

Le soudage sans l'utilisation d'un métal d'apport permet d'obtenir une zone de soudure comportant des caractéristiques mécaniques identiques au matériau corroyé ou forgé et avec un temps de cycle de soudage très court.

Selon un mode avantageux, les deux tôles métalliques sont soudées simultanément sur le profilé. Le soudage simultané des deux tôles métalliques sur le profilé permet notamment de faciliter le processus de maintien des tôles métalliques et permet d'obtenir le même retrait de matière pour chacune des tôles, le retrait de matière résultant de la formation des bourrelets de soudage.

Le procédé de réalisation d'un renfort métallique d'aube de turbomachine selon l'invention peut également présenter une ou plusieurs des caractéristiques ci-dessous, considérées individuellement ou selon toutes les combinaisons techniquement possibles :
- lesdites tôles métalliques sont soudées simultanément sur ledit profilé ;
- ladite étape de soudage desdites tôles métalliques sur ledit profilé est réalisée au moyen d'un procédé de soudage par friction linéaire ;
- ladite étape de soudage desdites tôles métalliques sur ledit profilé est réalisée au moyen d'un procédé de soudage par résistance ou par un procédé de soudage par étincelage ;
- ladite étape de positionnement est précédée par une étape de formage et/ou de cambrage du profilé et/ou desdites tôles métalliques ;
- ladite étape de soudage est suivie d'une étape d'arasage par usinage des bourrelets de soudage et/ou de rayonnage dudit profilé de façon à former le profil interne dudit renfort métallique ;
- le procédé comporte une étape de conformation à chaud dans un outillage de conformation à chaud comportant un poignard central apte à conformer le profil lesdites tôles métalliques, ledit poignard s'étendant au-delà des joints de soudure, formés lors de ladite étape de soudure, de façon à éviter la déformation desdits joints de soudure lors de ladite étape de conformation à chaud ;
- le procédé comporte une étape de traitement thermique de relaxation des contraintes ;
- le procédé comporte une étape de finition dudit renfort métallique consistant en :
   - une sous-étape de reprise mécanique en fraisage dudit profilé de façon à réaliser le profil aérodynamique du bord d'attaque, ou du bord de fuite, et la base du renfort :
   - une sous-étape de découpage desdites tôles métalliques de façon à obtenir les flancs du renfort ;
   - une sous-étape de polissage de la surface desdites tôles métalliques ;
- le procédé comporte une étape de découpage de ladite première tôle métallique et de ladite deuxième tôle métallique par un procédé de découpage et/ou d'usinage dudit profilé par un procédé de fraisage ou de laminage.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue latérale d'une aube comportant un renfort structurel métallique de bord d'attaque obtenu au moyen du procédé de réalisation selon l'invention ;
- la figure 2 est une vue partielle en coupe de la figure 1 selon un plan de coupe AA ;
- la figure 3 est un schéma synoptique présentant les principales étapes de réalisation d'un renfort structurel métallique de bord d'attaque d'aube de turbomachine du procédé de réalisation d'un renfort métallique selon l'invention ;
- la figure 4 est une vue du renfort métallique de bord d'attaque d'aube de turbomachine lors de la première étape du procédé de réalisation illustré en figure 3 ;
- la figure 5 est une vue du renfort métallique de bord d'attaque d'aube de turbomachine lors de la deuxième étape du procédé de réalisation illustré en figure 3 ;
- la figure 6a est une vue de coté du renfort métallique de bord d'attaque d'aube de turbomachine lors de la troisième étape du procédé de réalisation illustré en figure 3 ;
- la figure 6b est une vue en coupe du renfort métallique de bord d'attaque d'aube de turbomachine illustré à la figure 6a selon le plan de coupe C-C;
- la figure 7 est une vue de face du renfort métallique de bord d'attaque d'aube de turbomachine lors de la quatrième étape du procédé de réalisation illustré en figure 3 ;
- la figure 8 est une vue de face du renfort métallique de bord d'attaque d'aube de turbomachine lors de la cinquième étape du procédé de réalisation illustré en figure 3 ;
- la figure 9 est une vue du renfort métallique de bord d'attaque d'aube de turbomachine lors de la sixième étape du procédé de réalisation illustré en figure 3 ;
- la figure 10 est une vue de face du renfort métallique de bord d'attaque d'aube de turbomachine lors de la septième étape du procédé de réalisation illustré en figure 3 ;
- la figure 11 est une vue de coté du renfort métallique de bord d'attaque d'aube de turbomachine dans son état final obtenu par le procédé de réalisation illustré en figure 3 ;
- la figure 12 une vue en coupe transversale de l'outillage spécifique de maintien utilisé pour la réalisation du renfort métallique de bord d'attaque selon le procédé de réalisation illustré en figure 3.

Dans toutes les figures, les éléments communs portent les mêmes numéros de référence sauf précision contraire.

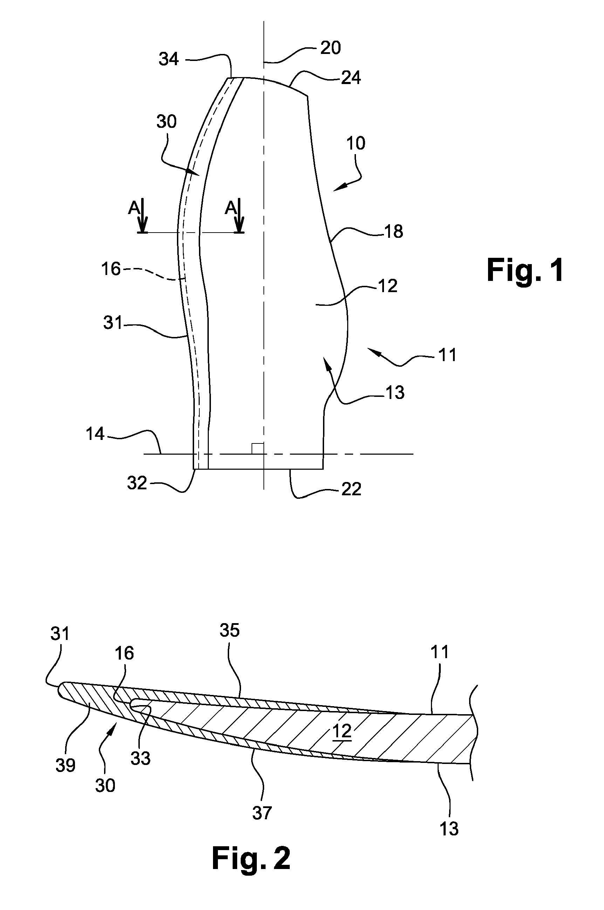

La figure 1 est une vue latérale d'une aube comportant un renfort structurel métallique de bord d'attaque obtenu au moyen du procédé de réalisation selon l'invention.

L'aube 10 illustrée est par exemple une aube mobile de soufflante d'une turbomachine (non représentée).

L'aube 10 comporte une surface aérodynamique 12 s'étendant selon une première direction axiale 14 entre un bord d'attaque 16 et un bord de fuite 18 et selon une deuxième direction radiale 20 sensiblement perpendiculaire à la première direction 14 entre un pied 22 et un sommet 24.

La surface aérodynamique 12 forme la face extrados 13 et intrados 11 de l'aube 10, seul la face extrados 13 de l'aube 10 est représentée sur la figure 1. L'intrados 11 et l'extrados 13 forment les faces latérales de l'aube 10 qui relient le bord d'attaque 16 au bord de fuite 18 de l'aube 10.

Dans ce mode de réalisation, l'aube 10 est une aube composite obtenue typiquement par drapage d'un matériau composite tissé. A titre d'exemple, le matériau composite utilisé peut être composé par un assemblage de fibres de carbone tissées et d'une matrice résineuse, l'ensemble étant formé par moulage au moyen d'un procédé d'injection de résine sous vide de type RTM (pour « Resin Transfer Molding »).

L'aube 10 comporte un renfort structurel métallique 30 collé au niveau de son bord d'attaque 16 et qui s'étend à la fois selon la première direction 14 au-delà du bord d'attaque 16 de la surface aérodynamique 12 de l'aube 10 et selon la deuxième direction 20 entre le pied 22 et le sommet 24 de l'aube.

Comme représenté à la figure 2, le renfort structurel 30 épouse la forme du bord d'attaque 16 de la surface aérodynamique 12 de l'aube 10 qu'il prolonge pour former un bord d'attaque 31, dit bord d'attaque du renfort.

De façon classique, le renfort structurel 30 est une pièce monobloc comportant une section sensiblement en forme de V présentant une base 39 formant le bord d'attaque 31 et prolongée par deux flancs latéraux 35 et 37 épousant respectivement l'intrados 11 et extrados 13 de la surface aérodynamique 12 de l'aube. Les flancs 35, 37 présentent un profil effilé ou amincie en direction du bord de fuite de l'aube.

La base 39 comporte un profil interne 33 arrondi apte à épouser la forme arrondie du bord d'attaque 16 de l'aube 10.

Le renfort structurel 30 est métallique et préférentiellement à base titane. Ce matériau présente en effet une grande capacité d'absorption de l'énergie due aux chocs. Le renfort est collé sur l'aube 10 au moyen de colle connue de l'homme du métier, comme par exemple une colle cyanoacrylique ou encore époxy.

Ce type de renfort structurel métallique 30 utilisé pour le renfort d'aube composite de turbomachine est plus particulièrement décrit notamment dans la demande de brevet EP1908919.

Le procédé selon l'invention permet de réaliser un renfort structurel tel qu'illustré à la figure 2, la figure 2 illustrant le renfort 30 dans son état final.

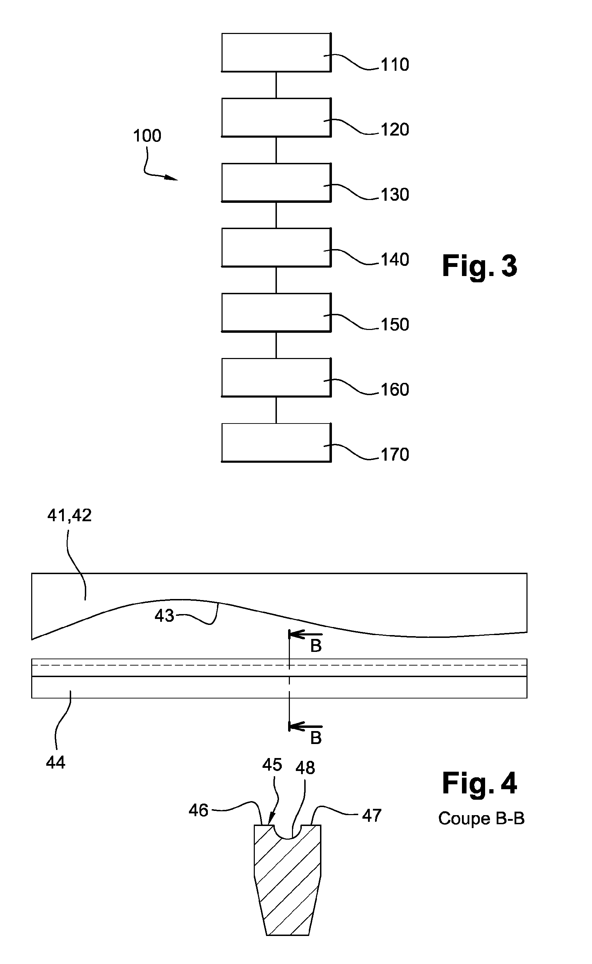

La figure 3 représente un schéma synoptique illustrant les principales étapes du procédé de réalisation 100 d'un renfort structurel métallique 30 de bord d'attaque d'aube 10 tel qu'illustré aux figures 1 et 2.

La première étape 110 du procédé de réalisation 100 est illustrée par la figure 4 et correspond à une étape de découpage de tôles planes 41, 42 et d'usinage d'un profilé 44.

Les tôles planes 41, 42 sont découpées à partir de tôles standard du commerce selon un profil spécifique 43 correspondant à un profil approché de la forme longitudinale du bord d'attaque 16 de l'aube 10.

Les tôles planes 41, 42 sont découpées par un procédé de découpage connu de l'homme du métier permettant de découper des tôles de faible épaisseur, c'est-à-dire de l'ordre de quelques millimètres. A titre d'exemple, le procédé de découpage peut être un procédé de découpage laser ou un procédé de découpe par jet d'eau ou par poinçonnage.

Les deux tôles découpées 41, 42 sont destinées à former les deux flancs 35, 37 intrados et extrados du renfort métallique 30 illustré à la figure 2.

Le profilé 44 est produit de façon conventionnelle par exemple par un procédé de laminage ou de fraisage à partir d'une barre standard de matière. Le profilé 44 peut également être produit par extrusion et fraisage d'un profilé standard. Le profilé 44 est une ébauche permettant de former la base 39 du renfort 30 illustré à la figure 2.

Le profilé 44 usiné est un profilé rectiligne de forme prismatique et dont la face supérieure 45 comporte une rainure 48 longitudinale et une première partie 46 et une deuxième partie 47 faisant saillies de part et d'autre de la rainure 48.

La deuxième étape 120 du procédé de réalisation 100 est une étape de formage et/ou de cambrage du profilé 44 et éventuellement des tôles découpées 41, 42. Le cambrage est réalisé par une mise en contrainte du profilé 44 et/ou des tôles 41, 42, par exemple au moyen d'une presse.

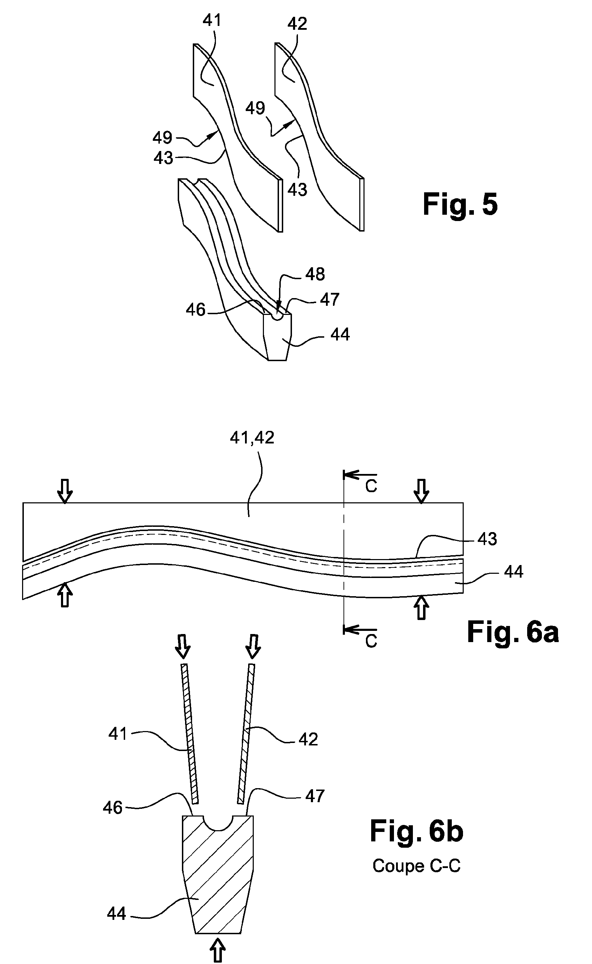

Le profilé 44 cambré et les tôles découpées 41, 42 sont illustrés à la figure 5. On notera que le cambrage du profilé 44 est déterminé de façon à épouser le profil spécifique 43 des tôles découpées 41, 42 et de façon à obtenir sensiblement la forme définitive du bord d'attaque 16 de l'aube 10.

Selon un premier mode de réalisation du procédé de réalisation selon l'invention, le cambrage du profilé 44, et éventuellement des tôles 41, 42, est réalisé selon deux dimensions. Toutefois, il est également envisageable de réaliser un cambrage du profilé 44 directement en trois dimensions ainsi que des tôles 41, 42.

La troisième étape 130 du procédé de réalisation 100 est une étape de positionnement, ou d'accostage, des deux tôles découpées 41, 42 sur le profilé 44. Cette étape permet notamment le positionnement de la surface de contact 49 de chaque tôle découpée 41, 42 sur la surface supérieure de chaque partie 46, 47 du profilé 44.

A cet effet, les deux tôles 41, 42 et le profilé 44 sont positionnés dans un outillage spécifique 60 apte au maintien de l'ensemble, notamment lors de l'étape suivante de soudage. Cette troisième étape 130 est illustrée à la figure 6a et à la figure 6b. La figure 6a illustre plus particulièrement une vue de coté du positionnement des deux tôles découpées 41, 42 sur le profilé 44 et la figure 6b illustre plus particulièrement une coupe de la figure 6a selon un plan de coupe C-C.

Les deux tôles découpées 41, 42 sont positionnées respectivement en regard d'une partie en saillie 46, 47 du profilé 44.

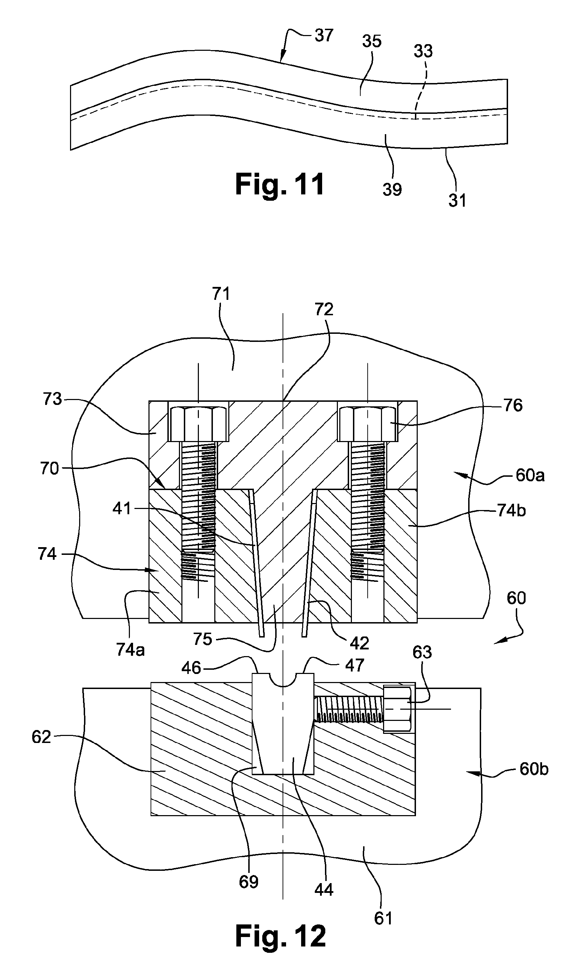

La figure 12 illustre une vue en coupe transversale d'un exemple d'outillage de maintien 60 maintenant en position les tôles découpées 41, 42 et le profilé 44.

L'outillage spécifique de maintien 60 comporte :
- une cassette supérieure 71 comportant un insert supérieur 72 ;
- une cassette inférieure 61 comportant un insert inférieur 62.

L'insert inférieur 62 comporte un évidemment 69 apte à recevoir le profilé 44. Le profilé 44 est bridé dans l'insert inférieur 62 en position au moyen de moyens de vissage 63 sur toute la longueur du profilé 44. A cet effet, le profilé 44 est dimensionné de façon à présenter suffisamment de matière pour le bridage dans l'insert inférieur 62.

Les tôles découpées 41, 42 sont maintenues en position dans l'insert supérieure 72 de l'outillage 60. A cet effet, l'insert supérieur 72 est formé par une semelle supérieure 73 comportant un élément central 75 de forme prismatique faisant saillie par rapport au plan de joint 70 de la semelle supérieure 73 et de la semelle inférieure 74. La semelle inférieure 74 est formée par deux parties 74a et 74b qui viennent plaquer les tôles 41, 42 en position contre les parois latérales de l'élément central 75 lors du bridage de la semelle supérieure 73 et de la semelle inférieure 74. Le bridage de l'ensemble est réalisé par des moyens de vissage 76.

La quatrième étape 140 du procédé de réalisation 100 est une étape de soudage des tôles 41, 42 sur le profilé 44 sans l'ajout d'un métal d'apport. Selon un premier mode de réalisation, le procédé de soudage est un procédé de soudage par friction linéaire. Le soudage par friction linéaire est réalisé au moyen de l'outillage spécifique de maintien 60 qui est monté sur une table oscillante (non représentée).

Le soudage par friction est un procédé de soudage mécanique où la chaleur nécessaire pour le soudage est fournie par le frottement, ou la rotation dans le cas d'un procédé de friction orbital, d'une première pièce contre une deuxième pièce, les deux pièces à assembler étant soumises une pression axiale opposée.

Les frottements sont réalisés par la mise en oscillation d'une pièce alors que l'autre pièce est maintenue fixe. Selon un mode de réalisation avantageux, l'insert inférieur 62 bridant le profilé 44 est maintenu fixe alors que l'insert supérieur 72 bridant les tôles 41, 42 oscille selon une direction parallèle au plan de joint 70.

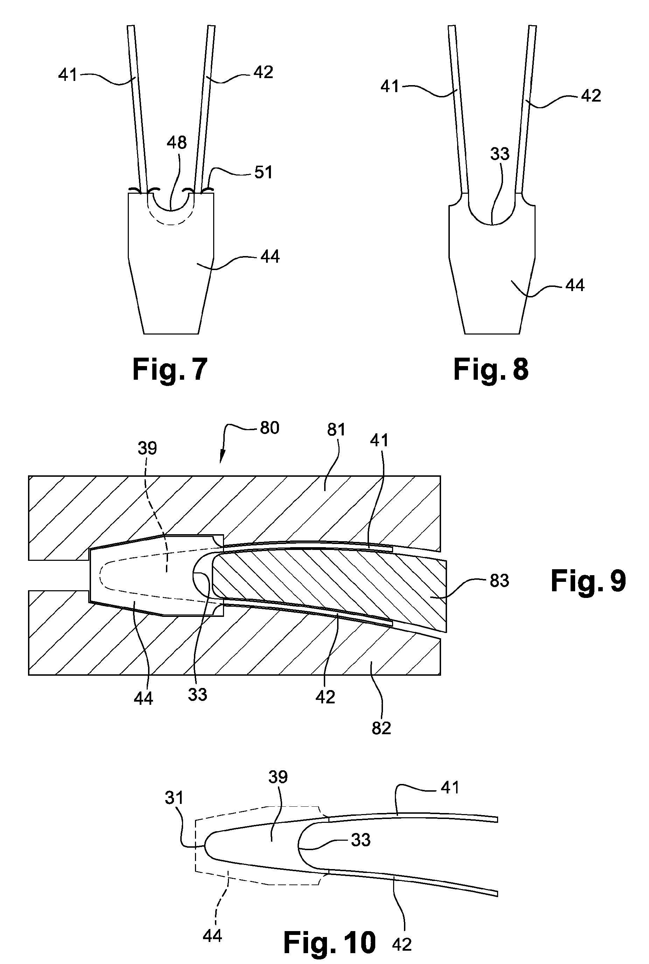

Lorsque les deux tôles 41, 42 entrent simultanément en contact, au niveau de leur surface de contact 49, avec les parties faisant saillies 46, 47 du profilé 44, par rapprochement progressif de la cassette supérieure 71 et de la cassette inférieure 61, les forces de friction provoquent un couple de résistance. L'énergie mécanique créée est transformée en chaleur dans la surface de contact augmentant la température rapidement jusqu'à la température de soudage (température de forgeage des matériaux utilisés). Durant la phase d'échauffement et de soudage, une quantité de matière est poussée vers l'extérieur formant ainsi des bourrelets de soudage 51 ainsi qu'un raccourcissement des pièces en mouvement. Cette étape est illustrée à la figure 7. La figure 7 illustre plus particulièrement une vue des deux tôles 41, 42 soudées par friction linéaire sur le profilé 44.

L'outillage 60 permet de souder par friction linéaire les deux tôles 41, 42 simultanément sur le profilé 44 tout en positionnant les surfaces de friction des tôles 41, 42 et du profilé 44 parallèlement. C'est-à-dire que lors de l'étape de soudage par friction linéaire, chaque surface de contact 49 des deux tôles métalliques 41, 42 est parallèle à une surface de contact des parties 46, 47 du profilé 44.

Le soudage simultané des deux tôles 41, 42 permet notamment de faciliter le processus de maintien des tôles 41, 42 et permet d'obtenir le même retrait de matière pour chacune des tôles 41, 42, le retrait de matière résultant de la formation des bourrelets de soudage 51.

Selon le mode de réalisation illustré à la figure 12, les deux tôles métalliques 41, 42 sont soudées en V sur le profilé 44. Selon un deuxième mode de réalisation non représenté, les deux tôles métalliques 41, 42 peuvent être soudées parallèlement sur le profilé 44.

Le soudage par friction linéaire permet d'obtenir des caractéristiques mécaniques identiques au matériau corroyé ou forgé et avec un temps de cycle de soudage très court.

La cinquième étape 150 est une étape d'arasage des bourrelets de soudage 51 par usinage et de rayonnage de la rainure 48 de façon à former le profil interne 33 du renfort métallique 30 final. Cette quatrième étape est illustrée à la figure 8. Le profil interne 33 correspond au profil du renfort métallique 30 dans son état final et est défini de façon à optimiser la répartition des contraintes dans le renfort.

La sixième étape 160 est une étape de conformation à chaud permettant de donner la forme finale au renfort 30. Cette étape de conformation à chaud est réalisée dans un outillage spécifique 80 apte à résister à une montée en température dans un four à la température de forgeage du matériau utilisé.

L'outillage 80, tel qu'illustré à la figure 9, est formé par une partie supérieure 81 et une partie inférieure 82 bordant de part et d'autre les tôles métalliques 41, 42 soudées au profilé 44 et conformées formant le renfort 30. L'outillage 80 comporte également un poignard central 83 est apte à être inséré entre les deux tôles 41, 42. La forme de l'outillage 80 et plus particulièrement la forme des parties supérieure 81 et inférieure 82 et le profil du poignard 83 correspondent aux profils finaux intrados et extrados des flancs 35, 37 du renfort métallique 30.

Les parties supérieure 81 et inférieure 82 de l'outillage 80 comportent au niveau de leur face interne, un évidement apte à recevoir et à maintenir en position le profilé 44 lors de l'étape de conformation à chaud.

On notera que le poignard 83 est dimensionné de sorte que les joints de soudure entre les tôles 41, 42 et le profilé 44, formés lors de l'étape 140 de soudage, soient en appui sur le poignard 83. De cette façon, les contraintes et les déformations sont limitées dans ces zones de soudure lors de la conformation à chaud. De façon avantageuse, le poignard 83 est inséré entre les deux tôles 41, 42 de façon à épouser au maximum le profil intérieur du profilé 44. A cet effet, le poignard 83 est adapté en fonction du profil interne 33 défini et comporte une forme complémentaire au profil interne 33.

Lors de cette étape de conformation, l'outillage spécifique 80 est placé dans un four à la température de forgeage du matériau utilisé. Ce traitement thermique permet également de relaxer les contraintes résiduelles de l'ensemble.

La septième étape 170 est une étape de finition et de reprise mécanique illustrée à la figure 10. Cette étape comporte une première sous-étape de reprise mécanique en fraisage du profilé 44 de façon à réaliser le profil aérodynamique du bord d'attaque 31 ainsi que la base 39 du renfort 30 illustrés aux figures 2 et 11. Une deuxième sous-étape consiste en la découpe et au détourage des tôles 41, 42 soudées et mises en forme de façon à obtenir les flancs 35, 37 du renfort 30 final. Cette sixième étape 160 comporte également une sous-étape de polissage des tôles 41, 42 de façon à obtenir l'état de surface requis et les épaisseurs des flancs 35, 37 voulus, notamment au niveau des parties minces destinées à venir envelopper le matériau composite de l'aube 10.

La figure 11 illustre en vue de profil le renfort 30 dans son état final obtenu par le procédé de réalisation selon l'invention.

En association avec ces principales étapes de réalisation, le procédé de réalisation peut également comporter des étapes de contrôle non destructif du renfort 30 permettant de s'assurer de la conformité géométrique et métallurgique de l'ensemble obtenu. A titre d'exemple les contrôles non destructifs peuvent être réalisés par un procédé par rayon X.

Selon un deuxième mode de réalisation du procédé de réalisation selon l'invention, la quatrième étape 140 de soudage des tôles 41, 42 sur le profilé 44 est réalisée par un procédé de soudage par étincelage ou encore de soudage par résistance. Le soudage par étincelage et le soudage par résistance sont deux procédés ne nécessitant pas de métal d'apport pour souder les pièces.

Le soudage par étincelage et le soudage par résistance utilisent l'effet joule dû au passage d'un courant basse tension et de forte intensité pour la fusion et le soudage des pièces.

Dans le procédé de soudage par étincelage, le passage de courant intense, au travers des aspérités réparties sur les faces de contact entre les deux pièces, produit des arcs avec des éjections et des vaporisations de métal fondu vers l'extérieur des faces de contact. Dès la fin de l'étincelage un effort de refoulement est appliqué sur les pièces à assembler repoussant sous forme de bavure la mince couche de liquide qui demeure sur la surface de contact.

Dans le procédé de soudage par résistance, les pièces à assembler sont serrées dans des mâchoires qui assurent l'amenée du courant. Les faces à assembler doivent être soigneusement préparées et exemptes d'oxydes et de calamine. Dès le passage du courant, les pièces s'échauffent et se soudent par effet joule. Un effort important est exercé pendant l'opération de soudage de sorte que le métal est refoulé. Le métal à l'état plastique forme un bourrelet de part et d'autre de la section de joint.

Le soudage par étincelage et par résistance permettent d'obtenir des caractéristiques mécaniques identiques au matériau corroyé ou forgé et avec un temps de cycle de soudage très court.

Selon un mode avantageux du procédé de réalisation selon l'invention, les deux tôles 41, 42 sont soudées simultanément sur le profilé 44.

Le procédé de réalisation selon l'invention a été décrit principalement pour un renfort structurel métallique à base titane ; toutefois, le procédé de réalisation selon l'invention est également applicable avec des matériaux à base nickel ou encore à base acier.

Le procédé selon l'invention a été particulièrement décrit pour la réalisation d'un renfort métallique d'une aube composite de turbomachine ; toutefois, le second procédé de réalisation est également applicable pour la réalisation d'un renfort métallique d'une aube métallique de turbomachine.

L'invention a été particulièrement décrite pour la réalisation d'un renfort métallique d'un bord d'attaque d'aube de turbomachine ; toutefois, le procédé de réalisation selon l'invention est également applicable pour la réalisation d'un renfort métallique d'un bord de fuite d'une aube de turbomachine.

Les autres avantages de l'invention sont notamment les suivants :
- réduction des coûts de réalisation ;
- réduction du temps de réalisation ;
- simplification de la gamme de fabrication ;
- réduction des coûts matière ;
- qualité métallurgique élevée de la zone soudée.

## Revendications

1. Procédé de réalisation d'un renfort métallique (30) de bord d'attaque ou de bord de fuite d'aube (10) de turbomachine, ledit procédé comportant successivement :
- une étape (130) de positionnement d'une première tôle métallique (41) et d'une deuxième tôle métallique (42) sur un profilé (44) au moyen d'un outillage spécifique (60) positionnant ledit profilé (44) et lesdites tôles métalliques (41, 42) de sorte que chaque tôle métallique (41, 42) présente une surface de contact (49) positionnée parallèlement avec une surface de contact (46, 47) dudit profilé (44) ;
- une étape (140) de soudage sans métal d'apport desdites tôles métalliques (41, 42) sur ledit profilé (44) de sorte que ladite surface de contact (49) de ladite première tôle métallique (41) est solidaire de ladite surface de contact (46) dudit profilé (44) et que ladite surface de contact (49) de ladite deuxième tôle métallique (42) est solidaire de ladite surface de contact (47) dudit profilé (44).

2. Procédé de réalisation d'un renfort métallique (30) d'aube de turbomachine selon la revendication 1 **caractérisé en ce que** lesdites tôles métalliques (41, 42) sont soudées simultanément sur ledit profilé (44).

3. Procédé de réalisation d'un renfort métallique (30) d'aube de turbomachine selon l'une des revendications 1 à 2 **caractérisé en ce que** ladite étape (140) de soudage desdites tôles métalliques (41, 42) sur ledit profilé (44) est réalisée au moyen d'un procédé de soudage par friction linéaire.

4. Procédé de réalisation d'un renfort métallique (30) d'aube de turbomachine selon l'une des revendications 1 à 2 **caractérisé en ce que** ladite étape (140) de soudage desdites tôles métalliques (41, 42) sur ledit profilé (44) est réalisée au moyen d'un procédé de soudage par résistance ou par un procédé de soudage par étincelage.

5. Procédé de réalisation d'un renfort métallique (30) d'aube de turbomachine selon l'une des revendications 1 à 4 **caractérisé en ce que** ladite étape (130) de positionnement est précédée par une étape (120) de formage et/ou de cambrage du profilé (44) et/ou desdites tôles métalliques (41, 42).

6. Procédé de réalisation d'un renfort métallique (30) d'aube de turbomachine selon la revendication 5 caractérisé en ce ladite étape de soudage (140) est suivie d'une étape (150) d'arasage par usinage des bourrelets de soudage (51) et/ou de rayonnage dudit profilé (44) de façon à former le profil interne (33) dudit renfort métallique (30).

7. Procédé de réalisation d'un renfort métallique (30) d'aube de turbomachine selon la revendication 6 **caractérisé en ce qu'**il comporte une étape (160) de conformation à chaud dans un outillage de conformation à chaud (80) comportant un poignard central (83) apte à conformer le profil lesdites tôles métalliques (41, 42), ledit poignard s'étendant au-delà des joints de soudure, formés lors de ladite étape de soudure, de façon à éviter la déformation desdits joints de soudure lors de ladite étape de conformation à chaud.

8. Procédé de réalisation d'un renfort métallique (30) d'aube de turbomachine selon l'une des revendications 6 à 7 **caractérisé en ce qu'**il comporte une étape de traitement thermique de relaxation des contraintes.

9. Procédé de réalisation d'un renfort métallique (30) d'aube de turbomachine selon la revendication 8 **caractérisé en ce qu'**il comporte une étape (170) de finition dudit renfort métallique (30) consistant en :
- une sous-étape de reprise mécanique en fraisage dudit profilé (44) de façon à réaliser le profil aérodynamique du bord d'attaque (31), ou du bord de fuite, et la base (39) du renfort (30) :
- une sous-étape de découpage desdites tôles métalliques (41, 42) de façon à obtenir les flancs (35, 37) du renfort (30) ;
- une sous-étape de polissage de la surface desdites tôles métalliques (41, 42).

10. Procédé de réalisation d'un renfort métallique (30) d'aube de turbomachine selon l'une des revendications 1 à 9 **caractérisé en ce qu'**il comporte une étape (100) de découpage de ladite première tôle métallique (41) et de ladite deuxième tôle métallique (42) par un procédé de découpage et/ou d'usinage dudit profilé (44) par un procédé de fraisage ou de laminage.
